# EUROPÄISCHE PATENTSCHRIFT

(11) **EP 1 260 089 B1**
(45) Veröffentlichungstag und Bekanntmachung des Hinweises auf die Patenterteilung: **24.08.2005**
(21) Anmeldenummer: 01915047.3
(22) Anmeldetag: 28.02.2001
(51) Int. Cl.: H04M 3/54, H04M 3/22, H04M 3/20

(54) **ERWEITERUNG DES LEISTUNGSMERKMALES "RUFWEITERGABE"**
EXTENSION OF THE "EXPLICIT CALL TRANSFER" FUNCTION
EXTENSION DE LA FONCTION "RECHEMINEMENT D'APPEL"

(30) Priorität: 02.03.2000 DE 10010236
(43) Veröffentlichungstag der Anmeldung: 27.11.2002
(73) Patentinhaber: SIEMENS AKTIENGESELLSCHAFT, 80333 München (DE)
(72) Erfinder: KREMBS, Bernhard, 82031 Grünwald (DE)
(74) Vertreter: Berg, Peter
(86) Internationale Anmeldenummer: PCT/DE2001/000743
(87) Internationale Veröffentlichungsnummer: WO 2001/065819

(56) Entgegenhaltungen:
- EP-A- 0 760 571
- GB-A- 2 324 677

## Beschreibung

Die vorliegende Erfindung betrifft eine Vermittlungsstelle zum Anschluß von Teilnehmern mit Endgeräten an ein öffentliches Telekommunikationsnetz, wie sie in dem Oberbegriff des beigefügten Anspruchs 1 beschrieben ist und ein Verfahren zum Anzeigen des Verbindungsstatus zwischen zwei Teilnehmern, wie es im Oberbegriff des beigefügten Anspruches 3 beschrieben ist.

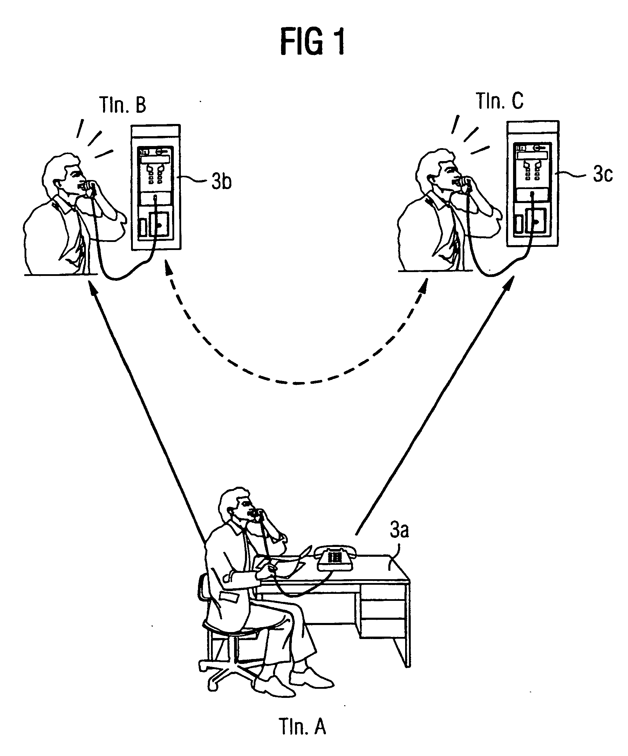

Für berechtigte Teilnehmer eines Telekommunikationsnetzes, insbesondere eines öffentlichen Telekommunikationsnetzes, ist es möglich, einen beliebigen ankommenden oder abgehenden Anruf von bzw. zu einem Teilnehmer an einen beliebigen weiteren Teilnehmer zu übergeben, wie er anhand von Fig. 1 beispielhaft erläutert wird.

Dabei hat z.B. ein erster Teilnehmer 3a (Teilnehmer A) mit seinem Endgerät (Telefon) eine Verbindung zu einem zweiten Teilnehmer 3b (Teilnehmer B) hergestellt. Außerdem hat der erste Teilnehmer eine Verbindung zu einem dritten Teilnehmer 3c (Teilnehmer C) hergestellt. Der erste Teilnehmer 3a hat nun die Möglichkeit, eine Verbindung zwischen dem zweiten 3b und dem dritten 3c Teilnehmer (bzw. deren Endgeräte) herzustellen. Dieses Leistungsmerkmal, das von der Vermittlungsstelle des ersten Teilnehmers zur Verfügung gestellt wird, heißt "Rufweitergabe" oder "Explicit Call Transfer (ECT)" und ist bei ETSI (European Telecommunications Standards Institute) unter EN300 367/368/369 definiert.

Nachdem die Verbindung zwischen dem zweiten 3b und dem dritten 3c Teilnehmer hergestellt wurde, können diese beiden Teilnehmer direkt miteinander kommunizieren; der erste Teilnehmer 3a, der diese Verbindung hergestellt hat, ist dann frei für neue Gespräche.

Diese Lösung hat den Nachteil, daß der erste Teilnehmer 3a nicht mehr in das laufende, von ihm weitergegebene Gespräch zwischen dem zweiten 3b und dem dritten 3c Teilnehmer eingreifen kann, wenn dies nötig sein sollte. Jedoch fallen für den ersten Teilnehmer 3a weiterhin die Gebühren für diejenige(n) Verbindung(en) an, die er selbst aufgebaut hat.

In dem gezeigten Beispiel fallen weiterhin Gebühren an, da er jeweils eine Verbindung zum zweiten 3b (Tln B) und dritten 3c (Tln C) Teilnehmer aufgebaut hat, obwohl er am aktiven Gespräch nicht mehr beteiligt ist; der zweite 3b bzw. dritte 3c Teilnehmer kann nicht mit Gebühren belastet werden, da keiner dieser Teilnehmer eine Verbindung selbst aufgebaut hat.

Als weiteren Stand der Technick wird auf die Druckschrift US 4 723 273 verwiesen.

Die Aufgabe der vorliegenden Erfindung ist somit, eine Vermittlungsstelle und ein in dieser Vermittlungsstelle angewendetes Verfahren bereitzustellen, bei denen der erste Teilnehmer die von ihm hergestellte Verbindung zwischen dem zweiten und dritten Teilnehmer (bzw. deren Endgeräte) kontrollieren, insbesondere ihr Bestehen prüfen und sie ggfs. beenden kann.

Diese Aufgabe wird durch eine Vermittlungsstelle gemäß dem beigefügten Anspruch 1 und ein in dieser Vermittlungsstelle angewendetes Verfahren gemäß dem beigefügten Anspruch 4 gelöst.

Weiterhin wird diese Aufgabe durch eine Vermittlungsstelle gemäß dem beigefügten Anspruch 7 und ein in dieser Vermittlungsstelle angewendetes Verfahren gemäß dem beigefügten Anspruch 9 gelöst.

Gemäß der vorliegenden Erfindung hat der erste Teilnehmer somit die Möglichkeit abzufragen, ob noch eine durch ihn hergestellte Verbindung zwischen einem zweiten und einem dritten Teilnehmer besteht. Dazu wählt der erste Teilnehmer an seinem Endgerät beispielsweise eine bestimmte Ziffernkombination oder er betätigt eine bestimmte Funktionstaste (abhängig vom Endgerät bzw. der Vermittlungsstelle), und bekommt von der erfindungsgemäßen Vermittlungsstelle eine entsprechende Rückmeldung, ob noch eine von ihm hergestellte Verbindung besteht.

Weiterhin hat der erste Teilnehmer erfindungsgemäß die Möglichkeit, eine oder mehrere von ihm hergestellte Verbindungen zwischen einem zweiten und einem dritten Teilnehmer auszulösen, d.h. zu beenden. Dazu wählt der erste Teilnehmer wiederum eine für diese Funktion bestimmte Ziffernkombination oder er betätigt eine entsprechende Funktionstaste an seinem Endgerät. Die erfindungsgemäße Vermittlungsstelle beendet daraufhin die vom ersten Teilnehmer hergestellte Verbindung zwischen dem zweiten und dem dritten Teilnehmer.

Beide Aktionen, d.h. Abfragen bzw. Überprüfen, ob noch eine durch den ersten Teilnehmer hergestellte Verbindung besteht, und Auslösen bzw. Beenden einer solchen Verbindung sind voneinander unabhängig, d.h. es ist beispielsweise das Auslösen einer Verbindung ohne eine vorherige Abfrage möglich.

Der Vorteil der erfindungsgemäßen Überprüfung bzw. des erfindungsgemäßen Beendens einer vom ersten Teilnehmer hergestellten Verbindung besteht darin, daß der erste Teilnehmer eine Kontrolle über seine anfallenden Gebühren und somit die Möglichkeit hat, die Verbindung zu beenden, so daß für ihn keine weiteren Gebühren anfallen.

Vorteilhafte Ausgestaltungen der vorliegenden Erfindung sind in den jeweiligen Unteransprüchen wiedergegeben.

Vorteilhafterweise wird dem ersten Teilnehmer das Beenden der von ihm hergestellten Verbindung quittiert. Dazu werden von der Auslösevorrichtung zweite Signalisierungsmeldungen erzeugt, die die Quittierung (Bestätigung) enthalten, und an eine Sendevorrichtung an den ersten Teilnehmer versendet.

Die jeweiligen zweiten Signalisierungsmeldungen, d.h. die Signalisierungsmeldungen, die anzeigen, ob eine durch den ersten Teilnehmer hergestellte Verbindung besteht, bzw. die Signalisierungsmeldungen, die die Bestätigung über das Beenden der durch den ersten Teilnehmer hergestellten Verbindung enthalten, können dabei beispielsweise Zeichen sein, die durch das Endgerät des ersten Teilnehmers ausgewertet und dem ersten Teilnehmer angezeigt werden. Die zweiten Signalisierungsmeldungen können aber auch in Form einer Hinweisansage an den ersten Teilnehmer übermittelt werden.

Die vorliegende Erfindung wird nachfolgend anhand eines bevorzugten Ausführungsbeispieles unter Bezug auf die beigefügten Zeichnungen näher erläutert, in denen zeigen:
Fig. 1 ein Beispiel für eine Rufweitergabe;
Fig. 2 eine schematische Darstellung der erfindungsgemäßen Vermittlungsstelle in einem Telekommunikationsnetz; und
Fig. 3 ein Beispiel eines Ablaufdiagrammes für die Übertragung von Signalisierungsmeldungen.

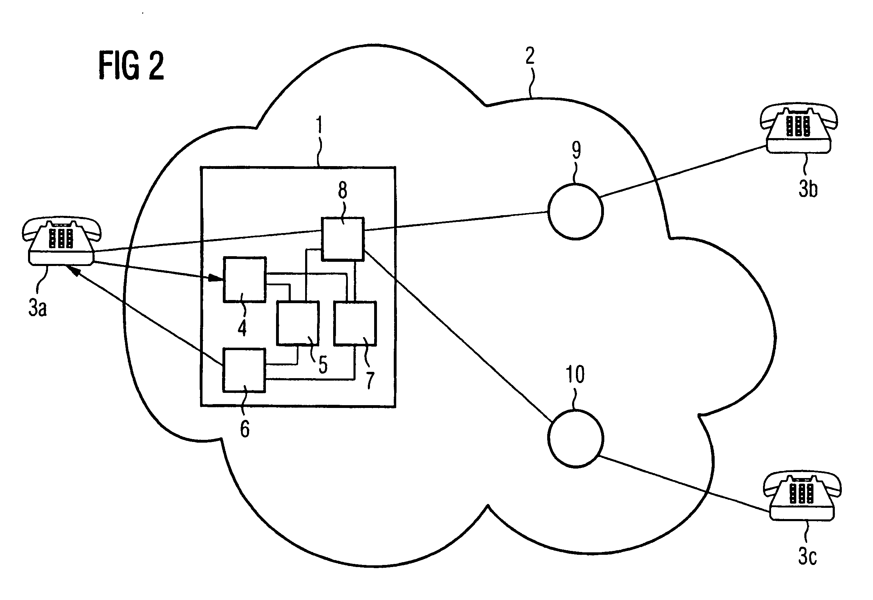

Anhand von Fig. 2 wird nachfolgend die Funktion der erfindungsgemäßen Vermittlungsstelle 1 näher erläutert.

In Fig. 2 wird ein öffentliches Telekommunikationsnetz 2 gezeigt, das aus Vermittlungsstellen 1, 9, 10 (Vermittlungsknoten) zum Anschluß von Teilnehmern 3a ... 3c mit ihren Endgeräten (z.B. Telefone, PCs) an das Telekommunikationsnetz 2 besteht und Verbindungsleitungen zum Verbinden der Vermittlungsstellen 1, 9, 10 untereinander aufweist; die Vermittlungsstelle mit dem Bezugszeichen 1 zeigt dabei schematisch die erfindungsgemäße Vermittlungsstelle.

Die erfindungsgemäßen Vermittlungsstelle 1 beinhaltet unter anderem die Empfangsvorrichtung 4 zum Empfangen der ersten Signalisierungsmeldungen, die Prüfeinrichtung 5 zum Überprüfen, ob eine (oder mehrere) durch den ersten Teilnehmer 3a hergestellte Verbindung(en) zwischen dem zweiten und dem dritten Teilnehmer 3b und 3c besteht. Weiterhin enthält die erfindungsgemäße Vermittlungsstelle 1 die Auslöseeinrichtung 7 und eine Vermittlungseinrichtung 8, die die Verbindungen zwischen den einzelnen Teilnehmern schaltet.

Im Beispiel von Fig. 2 ist der zweite Teilnehmer 3b über die Vermittlungsstelle 9 und der dritte Teilnehmer 3c über die Vermittlungsstelle 10 mit dem Telekommunikationsnetz 2 verbunden; dabei spielt es keine Rolle, über welche Vermittlungsstelle diese Teilnehmer (bzw. deren Endgeräte) mit dem Telekommunikationsnetz 2 verbunden sind.

Zum Einleiten des Leistungsmerkmales "Rufweitergabe", d.h. das Herstellen der Verbindung zwischen dem zweiten und dem dritten Teilnehmer 3b und 3c durch den ersten Teilnehmer 3a, muß jeweils eine Verbindung zwischen dem ersten und dem zweiten Teilnehmer 3a und 3b und dem ersten und dem dritten Teilnehmer 3a und 3c bestehen. Der erste Teilnehmer 3a hat nun die Möglichkeit, dieses Leistungsmerkmal, je nach Endgerät und Vermittlungsstelle, beispielsweise durch Eingabe einer Ziffern-/Tastenkombination (Feature Code) oder durch Betätigen einer Funktionstaste zu aktivieren. Dabei wird die Verbindung zwischen dem zweiten und dritten Teilnehmer 3b und 3c durch den ersten Teilnehmer 3a mittels der Vermittlungseinrichtung 8 hergestellt.

Nach dem Herstellen dieser Verbindung hat der erste Teilnehmer erfindungsgemäß die Möglichkeit abzufragen, ob durch ihn hergestellte Verbindungen noch bestehen, und/oder die Verbindungen auszulösen bzw. zu beenden, so daß für ihn keine weiteren Gebühren anfallen.

In beiden Fällen werden, ebenfalls beispielsweise durch Eingabe einer Ziffern-/Tastenkombination oder durch Betätigen einer Funktionstaste am Endgerät, durch das Endgerät des ersten Teilnehmers 3a erste Signalisierungsmeldungen erzeugt und an die Empfangsvorrichtung 4 der erfindungsgemäßen Vermittlungsstelle 1 versendet. Die Signalisierungsmeldungen sind dabei beispielsweise Töne im Mehrfrequenzverfahren (MFV) im Sprachkanal bei analogen Übertragungssystemen oder digitale Nachrichten im D-Kanal bei digitalen Übertragungssystemen (ISDN) und enthalten die entsprechenden Informationen darüber, ob eine Abfrage (Überprüfung) oder ein Beenden einer Verbindung angeregt werden soll.

Entsprechend der empfangenen ersten Signalisierungsmeldungen wird entweder durch die Prüfeinrichtung 5 eine Überprüfung durchgeführt, ob eine durch den ersten Teilnehmer 3a hergestellte Verbindung zwischen einem zweiten und einem dritten Teilnehmer 3b und 3c besteht, oder es wird gegebenenfalls eine solche Verbindung durch die Auslöseeinrichtung 7 beendet.

Nach der Durchführung einer dieser Aktionen werden durch die Prüfeinrichtung 5 oder die Auslöseeinrichtung 7 zweite Signalisierungsmeldungen erzeugt, die den Status der hergestellten Verbindung bzw. eine Quittierung über das Beenden einer hergestellten Verbindung enthalten. Die Quittierung ist dabei optional.

Die zweiten Signalisierungsmeldungen können dabei, je nach Vermittlungsstelle und verwendetem Endgerät, beispielsweise entweder eine Hinweisansage für den ersten Teilnehmer sein, oder eine Zeichenfolge, die durch das Endgerät des ersten Teilnehmers 3a ausgewertet und angezeigt wird.

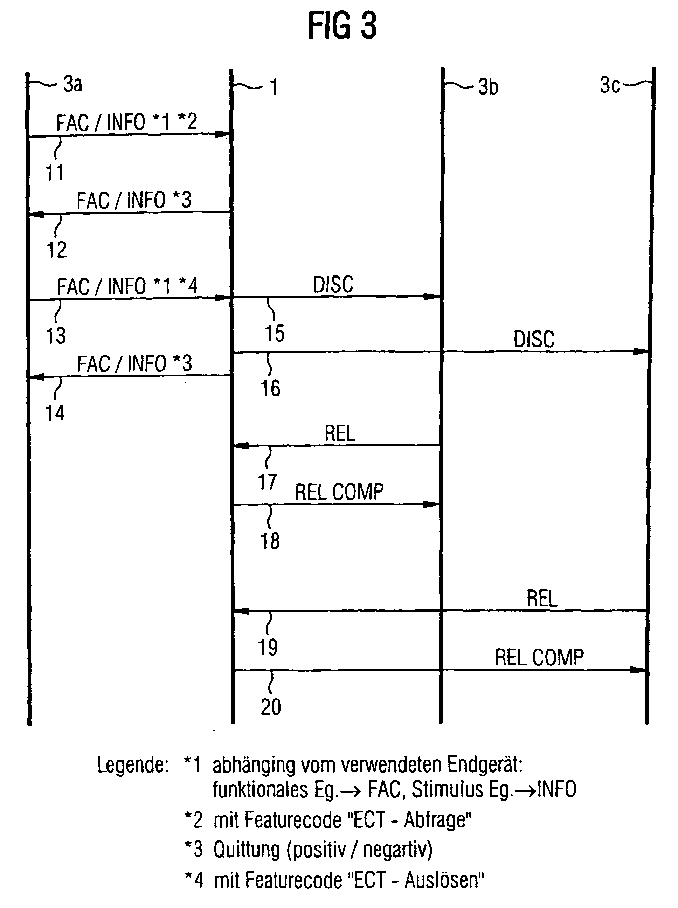

Nachfolgend wird der Meldungsablauf des erfindungsgemäßen Verfahrens anhand von Fig. 3 erläutert, wobei eine Überprüfung und anschließende Beendigung der durch den ersten Teilnehmer 3a hergestellten Verbindung erfolgt. Der gezeigte Meldungsablauf entspricht dabei dem Meldungsablauf im ISDN-Übertragungssystem.

Die erfindungsgemäße Überprüfung wird durch den ersten Teilnehmer 3a durch Versenden der Signalisierungsmeldungen 11 (erste Signalisierungsmeldungen) angeregt. Diese Signalisierungsmeldungen sind abhängig vom verwendeten Endgerät (Eg.); bei einem funktionalen Endgerät wird eine sogenannte FAC-Meldung (facility) versendet (d.h. durch Drücken einer Funktionstaste), bei einem Stimulus-Endgerät wird eine sogenannte INFO-Meldung versendet (d.h. die Eingabe erfolgt durch Betätigen einer Ziffern-/Tastenkombination), und enthalten einen sogenannten Feature Code ("ECT-Abfrage"), der die erfindungsgemäße Überprüfung anregt.

Als Antwort werden von der erfindungsgemäßen Vermittlungsstelle 1 zweite Signalisierungsmeldungen 12 an den ersten Teilnehmer 3a versendet, die ebenfalls in Abhängigkeit vom verwendeten Endgerät als FAC- oder INFO-Meldung versendet werden; der Teilnehmer 3a bekommt entsprechend beispielsweise eine Hinweisansage oder eine Anzeige auf seinem Display, ob noch eine durch ihn hergestellte Verbindung zwischen dem zweiten und dritten Teilnehmer 3b und 3c besteht.

Äquivalent dazu ist der Austausch der Signalisierungsmeldungen 13, 14 zwischen dem Endgerät des ersten Teilnehmers 3a und der Vermittlungsstelle 1 mit dem entsprechenden Feature Code zum Beenden der Verbindung ("ECT-Auslösen") und der entsprechenden Quittierung.

Zum Beenden der durch den ersten Teilnehmer 3a hergestellten Verbindung werden von der Vermittlungsstelle 1 jeweils Signalisierungsmeldungen 15, 16 (DISC, disconnect) über das Telekommunikationsnetz jeweils zum Endgerät des zweiten und dritten Teilnehmers 3b und 3c versendet. Danach erfolgt der standardisierte Meldungsaustausch RELEASE 17, 19 (REL) und RELEASE COMPLETE (REL COMP) zum abschließenden Beenden der jeweiligen Verbindungen zwischen den Teilnehmern 3b und 3c und der Vermittlungsstelle 1.

Der gezeigte Meldungsablauf gilt für ein ISDN-Übertragungssystem, ist jedoch auch auf andere Übertragungssysteme anwendbar.

## Patentansprüche

1. Vermittlungsstelle (1) zum Anschluss von Teilnehmern mit Endgeräten an ein Telekommunikationsnetz (2), mit
einem ersten Teilnehmer (3a) mit der Möglichkeit, eine Verbindung zwischen einem zweiten und einem dritten Teilnehmer (3b und 3c), die jeweils über das Telekommunikationsnetz (2) mit dem ersten Teilnehmer (3a) verbunden sind, herzustellen,
**gekennzeichnet durch**
eine Empfangsvorrichtung (4) zum Empfangen von ersten Signalisierungsmeldungen, die **durch** den ersten Teilnehmer (3a) versendet wurden und entweder eine Abfrage signalisieren, ob eine **durch** den ersten Teilnehmer (3a) hergestellte Verbindung zwischen dem zweiten und dem dritten Teilnehmer (3b und 3c) noch besteht, oder eine Anforderung zum Beenden der **durch** den ersten Teilnehmer (3a) hergestellten Verbindung zwischen dem zweiten und dem dritten Teilnehmer (3b und 3c) signalisieren, eine Prüfeinrichtung (5), die in Antwort auf die ersten Signalisierungsmeldungen überprüft, ob die **durch** den ersten Teilnehmer (3a) hergestellte Verbindung zwischen dem zweiten und dem dritten Teilnehmer noch besteht, und die zweite Signalisierungsmeldungen erzeugt, die das Ergebnis anzeigen, und eine Sendevorrichtung (6) zum Versenden der zweiten Signalisierungsmeldungen an den ersten Teilnehmer (3a), sowie eine Auslöseeinrichtung (7), die in Antwort auf erste Signalisierungsmeldungen mit einer Anforderung zum Beenden der **durch** den ersten Teilnehmer (3a) zwischen dem zweiten und dem dritten Teilnehmer hergestellten Verbindung die Verbindung beendet.

2. Vermittlungsstelle (1) gemäß Anspruch 1,
**dadurch gekennzeichnet, daß** die Auslöseeinrichtung (7) zweite Signalisierungsmeldungen erzeugt, die eine Bestätigung signalisieren, daß die durch den ersten Teilnehmer (3a) hergestellte Verbindung zwischen dem zweiten und dem dritten Teilnehmer (3b und 3c) beendet wurde, und daß die zweiten Signalisierungsmeldungen durch eine Sendevorrichtung (6) an den ersten Teilnehmer (3a) versendet werden.

3. Verfahren zum Anzeigen des Status einer von einem ersten Teilnehmer (3a) hergestellten Verbindung zwischen einem zweiten und einem dritten Teilnehmer (3b und 3c) durch eine Vermittlungsstelle, welche eine Empfangsvorrichtung (4) zum Empfangen von ersten Signalisierungsmeldungen, eine Prüfeinrichtung (5), zur Überprüfung, ob eine durch den ersten Teilnehmer (3a) hergestellte Verbindung noch besteht, und eine Auslöseeinrichtung (7) zum Beenden der durch den ersten Teilnehmer (3a) hergestellten Verbindungen umfasst,
**gekennzeichnet durch** die Schritte
Empfangen von ersten Signalisierungsmeldungen, die **durch** den ersten Teilnehmer (3a) versendet wurden und eine Abfrage signalisieren, ob eine **durch** den ersten Teilnehmer (3a) hergestellte Verbindung zwischen dem zweiten und dem dritten Teilnehmer (3b und 3c) besteht,
Überprüfen, ob eine **durch** den ersten Teilnehmer (3a) hergestellte Verbindung zwischen dem zweiten und dritten Teilnehmer (3b und 3c) besteht, in Antwort auf die ersten Signalisierungsmeldungen,
Erzeugen von zweiten Signalisierungsmeldungen, die anzeigen, ob eine **durch** den ersten Teilnehmer (3a) hergestellte Verbindung zwischen dem zweiten und dem dritten Teilnehmer (3b und 3c) besteht, und
Versenden der zweiten Signalisierungsmeldungen an den ersten Teilnehmer (3a).

4. Verfahren gemäß Anspruch 3, **dadurch gekennzeichnet, daß** die versendeten zweiten Signalisierungsmeldungen eine Hinweisansage für den ersten Teilnehmer (3a) enthalten.

5. Verfahren gemäß Anspruch 3, **dadurch gekennzeichnet, daß** die versendeten zweiten Signalisierungsmeldungen Zeichen enthalten, die dem ersten Teilnehmer (3a) angezeigt werden.

## Claims

1. Switching centre (1) for connecting users with terminals to a telecommunications network (2), with a first user (3a) with the option of establishing a connection between a second and third user (3b and 3c), each of which is connected via the telecommunications network (2) to the first user (3a)
**characterised by**
a receive device (4) for receiving first signalling messages, which were sent by the first user (3a) and either signal an enquiry whether a connection established by the first user (3a) between the second and third users (3b and 3c) still exists, or signal a request to terminate the connection established by the first user (3a) between the second and third users (3b and 3c), a test device (5) which verifies in response to the first signalling messages whether the connection established by the first user (3a) between the second and third users still exists, and which generates second signalling messages, which indicate the result, and a transmit device (6) for sending the second signalling messages to the first user (3a) as well as a clearing device (7) which terminates the connection in response to first signalling messages with a request to termination a connection established by the first user (3a) between the second and third users.

2. Switching centre (1) according to Claim 1,
**characterised in that** the clearing device (7) generates second signalling messages, which signal confirmation that the connection established by the first user (3a) between the second and third users (3b and 3c) has been terminated and that the second signalling messages are sent by a transmit device (6) to the first user (3a).

3. Method for indicating the status of a connection established by a first user (3a) between a second and third user (3b and 3c) by a switching centre, which comprises a receive device (4) for receiving first signalling messages, a test device (5) for verifying whether a connection established by the first user (3a) still exists and a clearing device (7) for terminating the connection established by the first user (3a),
**characterised by** the steps
receipt of first signalling messages, which were sent by the first user (3a) and signal an enquiry whether a connection established by the first user (3a) between the second and third users (3b and 3c) still exists,
verification whether a connection established by the first user (3a) between the second and third users (3b and 3c) still exists, in response to the first signalling messages, generation of second signalling messages, which indicate whether a connection established by the first user (3a) between the second and third users (3b and 3c) still exists, and
transmission of the second signalling messages to the first user (3a).

4. Method according to Claim 3,
**characterised in that** the second signalling messages sent contain a recorded announcement for the first user (3a).

5. Method according to Claim 3,
**characterised in that** the second signalling messages sent contain characters, which are displayed to the first user (3a).

## Revendications

1. Central (1) de commutation pour le raccordement d'abonnés par des terminaux à un réseau (2) de télécommunication, comportant un premier abonné (3a) ayant la possibilité de produire une liaison entre un deuxième et un troisième abonnés (3b et 3c) qui sont reliés respectivement par l'intermédiaire du réseau (2) de télécommunication au premier abonné (3a),
**caractérisé par**
un dispositif (4) de réception pour recevoir des premiers messages de signalisation qui sont transmis par le premier abonné (3a) et qui soit signalent une interrogation pour savoir s'il existe encore une liaison produite par le premier abonné (3a) entre le deuxième et le troisième abonnés (3b et 3c), soit qui signalent une demande de mettre fin à la liaison produite par le premier abonné (3a) entre le deuxième et le troisième abonnés (3b et 3c), un dispositif (5) de vérification, qui, en réponse aux premiers messages de signalisation, vérifie si la liaison produite par le premier abonné (3a) entre le deuxième et le troisième abonnés (3b et 3c) existe encore et qui produit des deuxièmes messages de signalisation qui affichent le résultat, et un dispositif (6) d'émission pour envoyer les deuxièmes messages de signalisation au premier abonné (3a), ainsi qu'un dispositif (7) de résolution qui, en réponse à des premiers messages de signalisation comportant une demande de mettre fin à la liaison produite par le premier abonné (3a) entre le deuxième et le troisième abonnés (3b et 3c), met fin à la liaison.

2. Central (1) de commutation suivant la revendication 1,
**caractérisé en ce que** le dispositif (7) de résolution produit des deuxièmes messages de signalisation qui signalent une confirmation qu'il a été mis fin à la liaison produite par le premier abonné (3a) entre le deuxième et le troisième abonnés (3b et 3c) et que les deuxièmes messages de signalisation sont envoyés par un dispositif (6) d'émission au premier abonné (3a).

3. Procédé pour indiquer le statut d'une ou plusieurs liaisons produites par un premier abonné (3a) entre un deuxième et un troisième abonnés (3b et 3c) par un central de commutation qui comprend un dispositif (4) de réception pour recevoir des premiers messages de signalisation, un dispositif (5) de vérification pour vérifier s'il existe encore une liaison produite par le premier abonné (3a), et un dispositif (7) de résolution pour mettre fin à des liaisons produites par le premier abonné (3a),
**caractérisé par** les étapes
réception de premiers messages de signalisation qui ont été envoyés par le premier abonné (3a) et qui signalent une interrogation pour savoir s'il existe une liaison produite par le premier abonné (3a) entre le deuxième et le troisième abonnés (3b et 3c),
vérification pour savoir s'il existe une liaison produite par le premier abonné (3a) entre le deuxième et le troisième abonnés (3b et 3c) en réponse aux premiers messages de signalisation,
production de deuxièmes messages de signalisation qui indiquent s'il existe une liaison produite par le premier abonné (3a) entre le deuxième et le troisième abonnés (3b et 3c), et
envoi des deuxièmes messages de signalisation au premier abonné (3a).

4. Procédé suivant la revendication 3, **caractérisé en ce que** les deuxièmes messages de signalisation envoyés contiennent un message enregistré pour le premier abonné (3a).

5. Procédé suivant la revendication 3, **caractérisé en ce que** les deuxièmes messages de signalisation envoyés contiennent des signes qui sont indiqués au premier abonné (3a).
